# EUROPEAN PATENT SPECIFICATION

(11) **EP 2 816 501 B1**
(45) Date of publication and mention of the grant of the patent: **20.11.2019**
(21) Application number: 13172580.6
(22) Date of filing: 18.06.2013
(51) Int. Cl.: G06K 7/00, G06K 7/10

(54) **A near field communication listen device emulating multiple NFC B technology tags**
Nahfeldkommunikationshörvorrichtung zur Emulierung mehrerer NFC-B-Technik-Tags
Dispositif d'écoute de communication en champ proche émulant plusieurs étiquettes de technologie NFC B

(43) Date of publication of application: 24.12.2014
(73) Proprietor: Telefonaktiebolaget LM Ericsson (publ), 164 83 Stockholm (SE)
(72) Inventor: Hussain, Jafer, 669597 Singapore (SG); Guo, Gang, 737920 Singapore (SG); Badiu, Sorin Adrian, 598727 Singapore (SG); Socol, Constantin, 596717 Singapore (SG)
(74) Representative: Ericsson

(56) References cited:
- EP-A1- 2 390 817
- US-A1- 2012 032 789

## Description

### Technical Field and Prior Art

Near field communication (NFC) is a set of contactless communication technologies which allow a proximity coupled device (PCD) to receive data, wirelessly, from a nearby PICC (proximity integrated circuit card) device. Nearby means 10cm or less. Communication is via radio at a frequency of 13.56 MHz. A PCD is sometimes known as an initiator, poll device or read device. A PICC is sometimes known as a listen device, card or tag. The specifications for NFC are developed and published primarily by the NFC Forum and appear in ISO/IEC 14443 and ISO/IEC 18000-3.

Three main signalling technology types are presently available, namely NFC-A, NFC-B and NFC-F. NFC-A uses Miller encoding, NFC-B uses Manchester encoding and 10% modulation, NFC-F uses Manchester coding with ASK modulation.

A read device (reader) may be a dedicated unit embedded in, for example, the mechanism of a turnstile (ticket application) or a debit/credit card reader (POS application) in a point of sale system. A listen device may be provided in the form of a physical travel card or payment card and is sometimes known as a tag. Such tags will provide one application at any time via a processor, memory, receiver and transmitter. Alternatively, a smart device such as a smart mobile phone, tablet or laptop computer may be provided with physical components such as an antenna, NFC transmitter and NFC receiver driven by code running on the device CPU to emulate either, or each (at different times) of, an NFC reader or an NFC tag. The smart device may thereby emulate: a travel pass (ticket application) or a payment card (credit, debit or prepay card application) according to the instant will of the user. The smart device may also receive data when acting as a reader from an NFC "poster" or set up a network between two or more NFC enabled smart devices where the network may use Bluetooth or WiFi communication. Users wish their smart NFC enabled devices to be able to emulate any of several NFC applications, often applications using a common NFC technology. For the avoidance of doubt the applications mentioned above are merely a few examples of a large and growing number of applications for the purpose of explanation and are not to be understood as limiting the scope of this document.

When a user wishes to initiate communication a user may select a specific read application on the NFC enabled reader. The NFC enabled reader then initiates communication by generating an RF field which causes all NFC listen applications in the field to be activated. After a guard period the reader sends a poll request signal, which will be NFC technology specific, in this case the poll request signal is specific to NFC-B. The NFC forum specifies either of two binary poll request signals for NFC-B technology, identified as SENSB_REQ or ALLB_REQ. Every active NFC-B tag within the field will respond to the poll request signal with one binary poll response signal identified as SENSB_RES. The poll response signal includes a unique identification (UID) for each tag known as NFCID0. The poll response signal will also contain information, such as the tag compliance with ISO14443-4 and the type of application installed on the tag. Once the reader has clearly received the UID for each listen application, the reader application can select the tag, or tags with the targeted functionality, i.e. corresponding to the application. "High level" commands can then be addressed from the reader to the specific application using the UID in order to cause the selected listener to reply to those specific protocol commands.

An NFC controller in an NFC enabled smart device with two or more Secure Elements (SE's), such as embedded secure elements (eSE) or, a universal integrated circuit card (UICC/SIM/USIM), in a smart NFC enabled device, need to emulate multiple NFC-B listen devices/tags. This is especially true for SEs acting as single wire protocol (SWP) hosts in an HCI network.

A controller controlling an NFC enabled device acting as a listen device is only able to respond to the poll request signal (SENSB_REQ) with a single poll response signal (SENSB_RES) at a time. NFC enabled devices are ordinarily only equipped with a single NFC transmitter and receiver. The NFC reader only sees a single poll response signal. This only indicates the presence of a single NFC-B listen device. However, the NFC enabled listen device may be capable of emulating several NFC enabled listen devices each of which need to be resolved (identified) by the reader. If the NFC enabled listen device does not respond first with the application tag sought by the reader the reader may continue (respond) in any of several ways. The NFC enabled reader may:
(1) switch off the RF field,
(2) repeat the NFC-B polling procedure,
(3) switch to polling other technologies (NFC-A, NFC-F, ISO15693 or a proprietary technology, in a more complex polling loop.

Selection of a sought NFC-B listen device from all listen devices emulated by the NFC enabled listen device can become a lengthy, uncertain process in certain scenarios. Every time an NFC-B listen device is polled, and responds, it is identified and sent a sleep command, unless it is the sought application. There is no mechanism to make the NFC enabled listen device respond immediately with the sought application tag. Consequently if the NFC enabled listen device has a large number of NFC-B enabled device applications, and the sought application responds late in the sequence of polling, the process of resolution can be prolonged, causing unwanted delay and consuming energy wastefully.

To stop the polling process continuing indefinitely, an arbitrary limit may be applied to the number of NFC-B polling cycles through which the read device may cycle. If the number of NFC-B listen devices exceeds this limit, the sought NFC-B tag may never be identified.

The NFC-B enabled listen device is only able to send one poll response signal SENSB_RES at one time and therefore only one secure element and associated application can be polled at a time. One way to address the aforementioned problem would be for the user of the NFC-B enabled listen device to intervene to select the sought application, (or disable any unwanted applications) and corresponding embedded secure element or UICC. For example if the user of the reader and the listen device are attempting to establish a peer to peer network, the user of the NFC enabled listen device might manually intervene to select a peer to peer network hosting application, which would need to be compatible with the networking application initiated by the reader. This is unsatisfactory because, the listen device user is commonly not aware of the specific application, or NFC technology, implemented by the read device or read device user, and therefore cannot select a corresponding NFC-B secure element or application.

When many different applications (e.g. travel card, payment card, access key etc.,) are installed on multiple secure elements, (e.g. an eSE or UICC) all the applications would need to be simultaneously enabled. This would require simultaneous emulation of multiple NFC-B listen devices. Simultaneous emulation of multiple NFC devices is not possible in a usual NFC listen device.

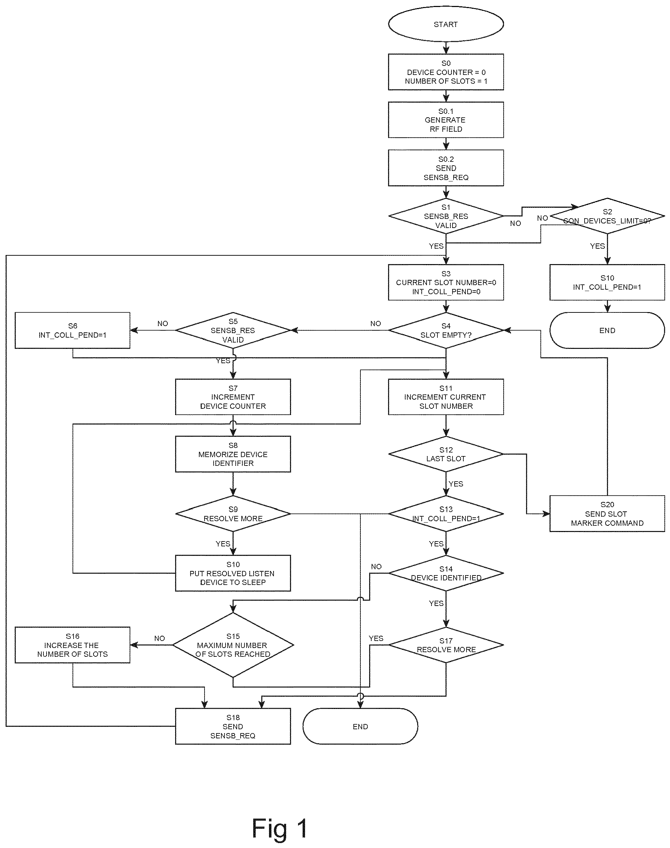

It will be of assistance in understanding the invention to understand the prior art process of controlling a reader device to resolve multiple physical NFC-B tags. It should be noted that multiple physical tags may send their respective poll response signals simultaneously. The method is described with reference to the flow chart of Figure 1 and derived from Figure 8 of NFC Forum Technical Specification 1.0 Activity 2010-11-18 on page 68.

The reader device starts and at step S0 and sets a device counter to 0. The NFC Forum Device assigns a parameter containing a number of time slots for receipt of an NFC-B poll response signal. The number of time slots is initially 1.

At step 0.1 the reader generates an RF field which will activate every NFC listen device (tag) within range. At step S0.2 the reader sends a poll request signal which is SENSB_REQ and specific to NFC-B technology tags the number of time slots is carried in the poll request signal. Only NFC-B tags will respond by sending a poll response signal in the sole (1^{st}) time slot. The poll response signal is a multi-byte binary signal including the unique identifier (NFCID0) of each NFC-B tag. When several physical tags are present in the field each will send the poll response during the first time slot. This will result in bit level collision occurring in the poll response (SENSB_RES) received in time slot 1. The poll response received will be invalid because of the collision, so at the next step S1 the method will go to step S2 where a predetermined device resolution limit value (CON_DEVICES_LIMIT) is compared with the number of devices (presently 0). The limit is not exceeded. So the method goes to step S3 where the current slot number is set to 0 and a collision flag (INT_COLL_PEND) is reset to 0 to indicate no collisions.

The slot 1 is not empty at step S4 and the poll response is not found valid at subsequent step S5 so that the method goes to step S6 where the collision flag is set to 1 to indicate a collision. The method goes to step S11 to increment the current slot number to 2. At step S12 the current slot number is compared to the number of slots. In this case the current slot number is 2 and exceeds the number of slots set at S0 (N=1) the method therefore goes to step S13 where the collision flag is set so the method goes to step S14 where the device is not identified so the method goes to step S15. At S15 the number of slots N is compared with a predetermined maximum number of slots allowed and if not equalled goes to step S16 where the number of slots is increased. The increase in the number of slots is specified in NFC Technology TS Digital page 54 Table 24 and will be one of the predetermined sequence 2, 4, 8 or 16. In this case it will be 2.

When the number of slots has been increased the poll request SENSB_REQ is sent again at step S18. Each unidentified tag will randomly select one of the two time slots in which to send its poll response. In this example we shall assume four tags are present all of which respond into slot #1. Slot #1 is timed to commence immediately after transmission of the poll request. The transmission of the poll request signal indicates the start of a new resolution cycle.

The method goes from step S18 to step S3 where the current slot number is set to zero and the collision flag is set to null (0). The slot is not empty at step S4 so the method proceeds to step S5.

The poll response SENSB_RES will be valid at step S5 so the device counter will be incremented to 1 at step S7 and the device identifier NFCID0 recorded at step S8. At step S9 the device counter (1) is compared to the devices limit, which is usually 5. Because the limit is not reached the method will choose to resolve more, so the read device sends the sleep command using the recovered NFCID0 of the identified tag at step S10. The identified (resolved) tag goes to sleep , a state unresponsive to the poll request signal.

The current slot number is incremented to 2 at next step S11. This is not the last slot, so a slot marker command is sent and the tags which randomly chose slot 2 will send their poll response signal SENSB_RES into time slot 2. Consequently the method will find slot 2 occupied when it goes to step S4. However, because each of the remaining three unresolved tags will respond to the slot marker there will be a collision in slot #2.

Because of collision, the poll response in slot 2 will be invalid at step S5 so that the collision flag will be set to 1 by the step S6.

From step S6 the method goes to step S11 where the slot number is incremented to 3 which is not found to exceed the last slot at step 12. The method therefore goes to step 13 where the collision flag set to 1 moves the method to step 14. The device cannot be identified because of the collision so the method goes to step 15. At step 15 the maximum number of slots (16 according to the NFC specification) is not reached so the method goes to step 16 to increase the number of slots N to 4. The increase in the number of slots is a sequence predetermined according to the NFC forum as 1,2,4,8 and finally 16.

The method goes from step S15 to send the poll request at step S18 and returns to step S3. The remaining three tags which are not asleep will randomly select one of the four time slots provided in resolution cycle three in which to respond.

In the next (3^{rd}) cycle no tag selects slot one, one tag selects slot 2 and two tags select slot 4 leaving slots 1 and 3 vacant.

The method will initially step through to slot 2 where the tag identity NFCID0 will be recorded as explained above, the method will then step through again to the 4^{th} slot where a collision is identified and the method will progress to step S16. There are still two unresolved tags at this stage and it is still possible that a collision will occur leading to a further cycle with the number of slots increased to the limit 16.

A conventional NFC enabled listen device emulating several applications only has one physical NFC front end,. one transmitter and can therefore only transmit one poll response (SENSB-REQ) at a time. Also the constraints imposed by security elements may preclude the transmission of more than one poll response at a time. This means that there can never be a collision in any time slot specified by the reader device. Accordingly the reader device will not increase the number of slots. As a consequence NFC-B technology resolution of multiple applications in a listener may unnecessarily consume time and energy and is uncertain.

The reader may be further enlightened as to the state of the art by reference to EP02390817, which discloses, an NFC controller able to communicate, in contact mode with first and second applications. The controller is able to establish, and to manage, a first communication between a contactless reader device and the first application by using a specific type of contactless protocol. The NFC controller is able to establish and to manage a second communication between the contactless reader device and the second application by using the specific type of contactless protocol. The NFC controller is adapted to handle simultaneously said first and second communications.

### Statement of Invention

According to a first aspect of the present invention there is provided an NFC-B enabled listen device according to claim 1.

According to a second aspect of the present invention there is provided a method of controlling an NFC B enabled listen device according to claim 7.

Further preferred aspects of the present invention are defined in the dependent claims.

The NFC-B listen device controller may send a collision emulation signal into each time slot in a collision resolution cycle or only one conventional poll response signal in each time slot and a collision emulation signal to the last time slot.

### Brief Description of the Drawings

Embodiments of an NFC-B enabled listen device and a method of controlling an NFC enabled listen device will now be described, by way of example only, with reference to the accompanying illustrative drawings; wherein:
Figure 2 is a diagrammatic illustration of an NFC enabled device in the form of a mobile phone;
Figure 3 is a flowchart illustrating the method implemented in an NFC enabled listen device;
Figure 4 is a finite state diagram illustrating a first embodiment; and
Figure 5 is a finite state diagram illustrating a second embodiment.

### Detailed Description of Drawings

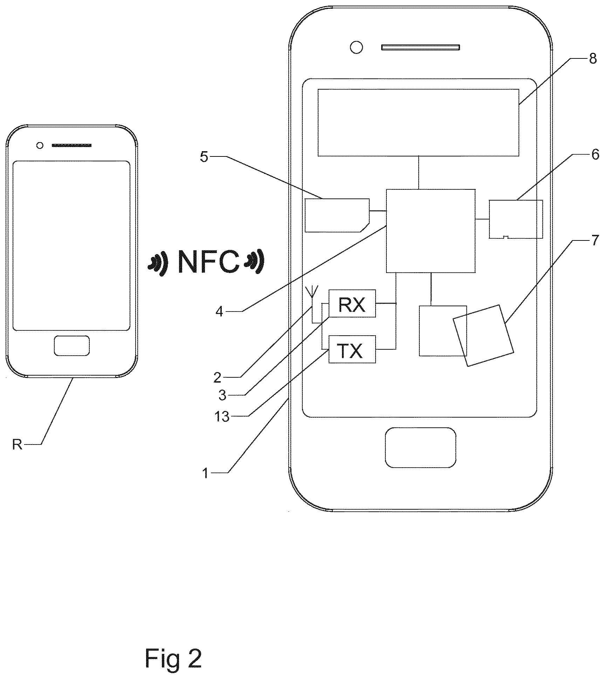

Figure 2 illustrates a situation where a near field communication (NFC) enabled device embodied in a mobile cell phone "R" is operated as a read device, by a user. The read device R will initiate near field communication with another NFC enabled mobile phone 1 which will act as a listen device and will be referred to hereafter as a listener. The cell phone "R" is operated as a read device and will be referred to hereafter as a reader R. The reader R is operated by a first user to select an application, for example to set up a secure peer to peer WiFi network with the cell phone 1. This application uses NFC-B communications technology. Reader R first transmits an RF field as explained with reference to Figure 1 in the prior art. The listener 1 will receive the RF field via antenna 2 and receiver 3 which will activate an NFC controller 4. The NFC controller 4 manages communications with other components of the listener including secure environments such as: a universal integrated circuit card, which may be a subscriber identity module (SIM) card 5, a secure digital card 6 or an embedded secure environment 7. The NFC controller 4 communicates with a listener application and host processor 8 to provide a listener/user interface.

Any or all of the secure environments 5, 6, 7 may provide one or more NFC applications, one at a time. Each of the NFC applications will be activated in response to the RF field.

After a guard period the reader R transmits a poll request signal. In this case the application being sought uses NFC-B technology and the reader will transmit an NFC-B specific poll request signal. As defined in the NFC forum specifications the poll request signal is technology specific, i.e. only NFC-B applications can respond to the poll request signal and other technologies will remain unresponsive. When the application being sought by the reader uses NFC-B the poll request signal may be one of SENSB_REQ, or ALLB_REQ. In this case the signal is SENSB_REQ. Each NFC-B technology application is, according to the NFC specifications, required to respond to the poll request signal by sending a poll response signal (SENSB_RES). The poll response signal includes a unique identification of the application being emulated known as NFCID0 and the application data identifier (AFI).

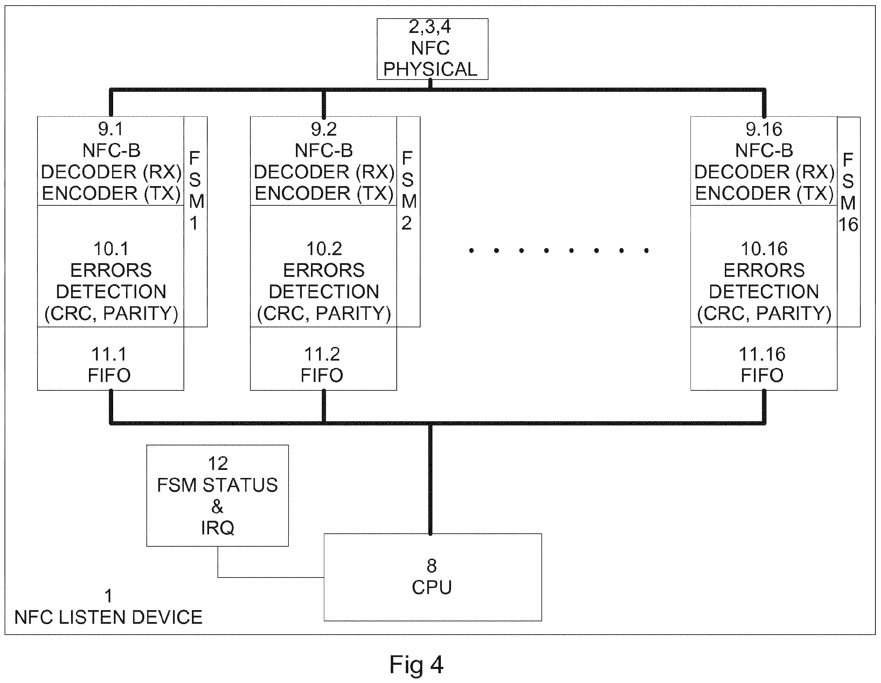

As shown in figure 4 the NFC listener 1 configures the NFC controller to provide a plurality of up to sixteen finite state machines FSM1 to FSM16, one each for each application. The method is limited to sixteen fixed state machines because the reader is limited to no more than sixteen time slots by the NFC specifications. Thus the number of finite state machines which is created for any cycle is limited to the maximum limit of the number of time slots generated by the reader R as specified in the specifications. In some variants of the method and listen device the number of finite state machines may be limited to the number of time slots reported in the poll request signal, that is the number of time slots available in a current resolution cycle. It will be appreciated that the NFC specifications may change in future in which case the maximum number of time slots and maximum number of finite state machines may change accordingly.

Each finite state machine includes an NFC-B decoder/encoder block 9.1-9.16 in communication with the receiver 2 and the transmitter 3. Also included is an errors detection block 10.1 -10.16 and a first in first out block (FIFO) block 11.1-11.16. Each fixed state machine is provided by the NFC controller and controlled by communication with the listener CPU 8. The listener CPU 8 is responsive to a fixed state machine status block 12.

The NFC controller may be implemented within the CPU 8 by executing machine readable code retrieved from a memory in known fashion. The code to implement the controller may be installed by download over any form of network, including the internet, 2G, 3G or 4G. The code for installation may be recorded on a server or any other media such as magnetic hard drive, optical disc or flash drive. Accordingly such a code package adapted for download and/or installation in an NFC enabled smart device is considered to fall within the scope of this invention.

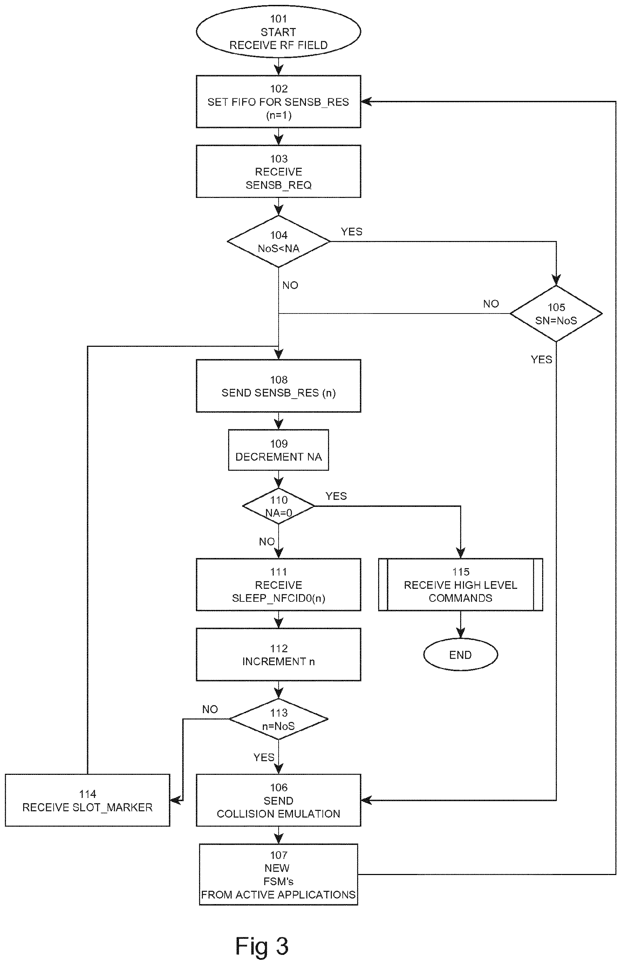

The control method implemented is shown in figure 3. As shown the process is started in the listener by reception of the RF field at step 101. Each NFC-B application is allocated a sequential position (n) by FIFO at step 102. At step 103 the listener 1 receives the poll request signal SENSB_REQ. As explained with reference to the figure 1 the poll request signal includes a number of timing slots (NoS) allocated for reception of each poll response signal. The number of timing slots is initially always 1. In the simple case where only one NFC-B application is activated in the listen device, the number of slots (NoS) communicated in the poll request will equal the number of applications NA, which is equal to the number of fixed state machines. Because the number of slots is not less than the number of applications, at step 104 the output will be negative and the method will step to 108. At step 108 the listener 1 will send the poll response SENSB_RES(1) for the sole application (n=1) which will be received clearly by the reader R. When the method moves to step 109 where the number of active applications is decremented by one. Then at step 110 the number of applications will be zero so that the output from the step is positive to step 114 where the listener 1 waits to receive high level commands.

In the more complex situation where the listener 1 can deploy several NFC-B applications but has less than 17 applications (1<n<17) each application is allocated a sequence numbered finite state machine which is addressed in the order n=1 to n=16. When the first poll request is received at step 103 the number of slots NoS will initially be one and therefore less than the number of applications (NA=16). The output of step 104 will be positive and the method will step to 105. At step 105 the slot number (SN=1) will, for the first cycle, equal the number of slots (NoS=1), and will step to 106 where a collision emulation signal is transmitted to the reader 1.

The collision emulation signal can be generated by simultaneously transmitting two or more of the poll response signals (as shown in Table 1 below) or by generating a collision emulation signal which is pre-recorded. The method then advances to step 107 where new fixed state machines are generated from the active applications for reasons which will be explained later.

When the reader receives the collision emulation signal it will respond according to the method of figure 1 by increasing the number of slots (NoS). According to the NFC specification the number of slots will increase for the second cycle to two the reader R will then send a new poll request signal (SENSB_REQ) indicating that two slots are set.

The method goes to step 102 to order the transmission of the poll response signals from each finite state machine. The method then advances to step 103 to receive the new poll request signal and steps to 104 where the number of slots (NoS=2) is still less than the number of applications (NA=16) so the cycle repeats through step 105 until either the number of slots is equal to the number of fixed state machines generated or, the number of slots reaches the maximum allowed (NoS=nFSM=16). It may be noted that nFSM may be less than 16 (i.e. 2, 4 or 8) where the number of applications is less than 16.

The method then advances to step 104 where the output is negative and the method goes to step 108 where the first poll response signal (SENSB_RES(1)) is sent from the listener 1. The method steps to step 109 where the number of active applications is decremented by one to fifteen. At step 110 the number of active applications is not zero so that the method progresses to step 111.

The reader R will have clearly received and resolved SENSB_RES(1) and will respond, according to the method of the NFC specification at figure 1, by transmitting a sleep command directed at the resolved application (SLEEP_NFCID0(1)) which is received at step 111. The application sequence number is then incremented from 1 to 2 at step 112 (n=2).

At step 113 the application sequence number n=2 is less than the number of slots (NoS=16) so that the method goes to step 114 where a slot marker is received from the reader R.

The listener 1 responds to receipt of the slot marker command by transmitting the poll response signal SENSB_RES(2) at step 108. This method will continue to cycle through steps 108-114 until the sixteenth application and the remaining active applications is zero at step 110 which generates a positive output from step 110. When the output from step 110 is positive the method advances to step 115 to receive high level commands from the reader.

The reader having resolved all the NFC-B applications can identify any application (n) corresponding to the application sought and address commands to it exclusively using the unique identifier NFCID0(n).

In the case where the number of applications NA exceeds 16, step 104 will cause the method to go to step 105. Where the slot number (SN=1) is equal to the number of slots (NoS) so that the collision emulations is sent at step 106 thereby causing the number of slots to increase to two. The application then moves to step 106 where new finite state machines are generated and sequenced at step 102 min preparation for the receipt of the poll request at step 103. The number of slots NoS will be less than the number of applications and the slot number on the first pass will not be equal to the number of slots so that the method will advance to step 108. The first poll response will be sent at step 108 at step 109 the number of active applications will be reduced from say 17 to 16 at step 109, at step 109 the number of active applications is not zero so the last resolved application will be slept by receipt of the sleep command at step 111. The application sequence number will be incremented to 2 which will be equal to the number of slots at step 113 so that a collision emulation signal will be sent at step 106. At step 107 a new set of fixed state machines is generated from the remaining 16 active applications and the method returns to step 102. The method then operates as previously described for resolution of sixteen active applications.

The method therefore enables the resolution of any number of applications.

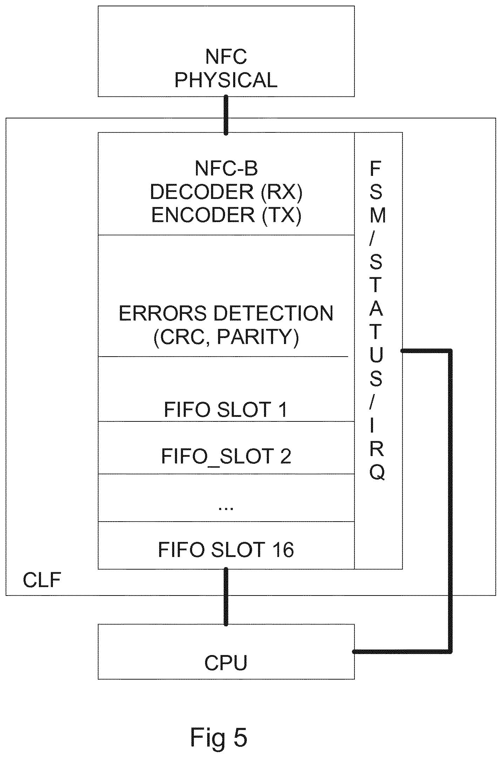

Figure 5 illustrates a second embodiment of the application using a single fixed state machine. In this embodiment physical NFC components 2, 3 and 4 are in communication with a single NFC-B decoder encoder 9 forming the first block of the fixed state machine. The fixed state machine has a single errors detection block 10 and a single first in first out (FIFO) block 11 which generates 16 ordered time slots to time order the first sixteen poll response signals (SENSB_RES) and thereby deliver one poll response signal to each time slot generated in response to a slot marker signal from the reader R. The method of operation is otherwise similar to that shown and described with reference to figure 3.

Table 1 below shows a third embodiment in which a collision emulation signal is transmitted in every time slot available until the number of time slots reaches a maximum, e.g. 16. In accordance with the reader device collision resolution described in the NFC specifications and with reference to figure 1, the poll response (SENSB_RES) is transmitted in a first time slot 1 commencing immediately after receipt of the poll request signal (SENSB_REQ). The duration of the time slot (T4) is such that a bit level collision will occur between any two poll response signals (SENSB_RES1 and SENSB_RES2) transmitted into the time slot, even if not exactly synchronised and will therefore cause the read device (R) to increase the number of time slots. After receipt of the poll request, the increased number of time slots is delimited by the reader device sending the slot marker signal (SLOT_MARKER).

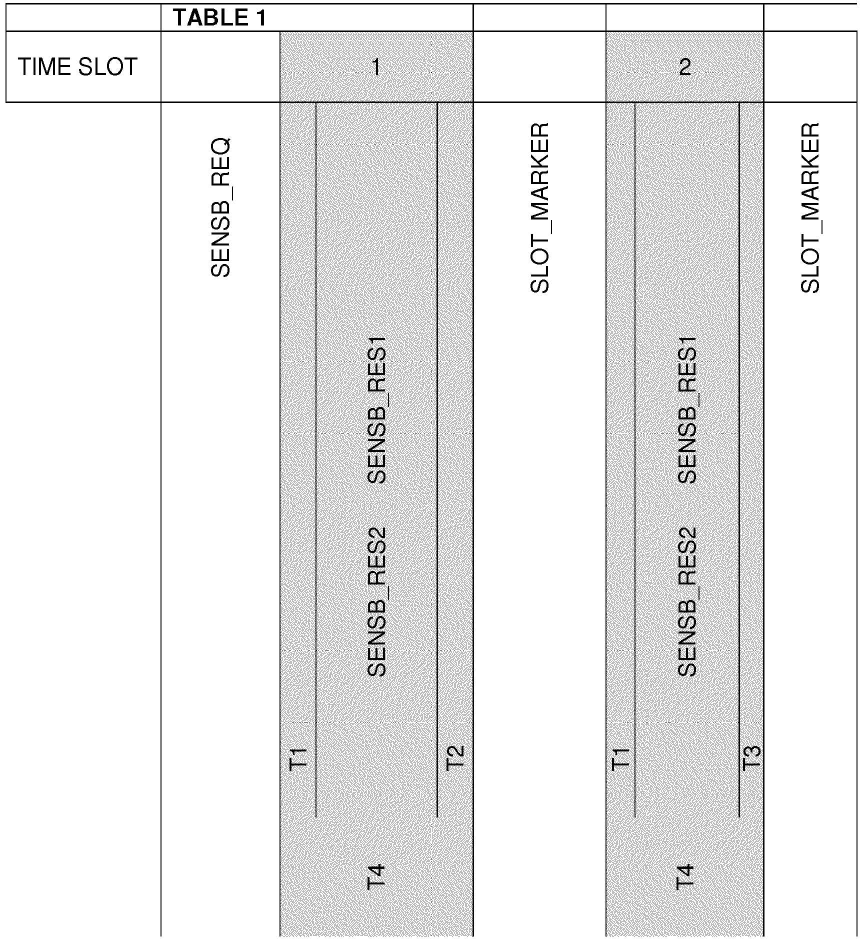

## Claims

1. An NFC-B enabled listen device (1) having:
a controller (8) to drive a transmitter and receiver whereby the device can emulate a plurality of NFC-B applications; the controller (8) being responsive to reception of a single poll request signal to transmit a poll response signal, provided by one of the applications;
said controller (8) responsive to reception of the single poll request signal to transmit a poll response signal in the form of a collision emulation signal, which emulates a collision between a plurality of poll response signals;
**characterised in that** the controller (8) provides a comparator arranged to compare the number of time slots reported in the poll request signal less than the number of active NFC-B applications and is arranged to respond to the number of time slots being less than the number of active applications by sending the collision emulation signal.

2. An NFC-B listen device (1) according to claim 1 wherein the controller (8) creates the collision emulation signal from a combination of two or more poll response signals.

3. An NFC-B listen device (1) according to claim 1 wherein the collision emulation signal is pre-recorded in a memory for transmission.

4. An NFC-B listen device according to claim 3 wherein the controller (8) provides a comparator which compares the number of time slots with a maximum number of time slots whereby the controller is responsive to a poll request signal transmitting the maximum number of time slots to transmit an ordered sequence of poll response signals, one each for each application being transmitted into each time slot.

5. An NFC-B listen device according to claim 4 wherein, a comparator provided by the controller compares the sequence number of the applications resolved with the number of slots to transmit the collision emulation signal and to generate a new ordered sequence of applications which remain active when the application sequence number equals the number of time slots.

6. An NFC-B listen device according to any one of the preceding claims wherein the controller (8) is responsive to transmission of each poll response signal to decrement the number of active applications and provides a comparator, responsive to the number of active applications reaching zero to put the listener (1) into a state to receive high level commands.

7. A method of controlling an NFC-B enabled listen device according to claim 1 comprising the step (104) of:
comparing the number of slots reported in a received poll request signal with a total number of NFC-B applications active on the listen device (1), and where the number of slots is less than the number of active applications, sending a collision emulation signal (107) to provoke the read device (R) to implement a collision resolution method which will increase the number of slots.

8. A method according to claim 7 comprising the step of creating the collision emulation signal by the simultaneous transmission of at least two of the poll response signals.

9. A method according to claim 7 comprising the step of recovering the collision emulation signal from a memory where it is pre-recorded for transmission.

10. A method according to claim 7 comprising the step (105) of comparing an instant slot number with the number of slots and where the slot number is less than the number of slots, the step (108), sending the next in a sequence of poll response signals not previously sent, to be received in one time slot, and the step (113) when the application sequence number equals the number of slots, and the number of active applications is not zero, sending the collision emulation signal.

11. A method according to claim 10 comprising the step (107) of generating a new sequence of poll response signals from the remaining active applications each method cycle that a collision emulation signal is transmitted.

## Patentansprüche

1. NFB-C-befähigte Hörvorrichtung (1), umfassend:
eine Steuereinrichtung (8) zum Treiben eines Senders und eines Empfängers, wobei das Gerät eine Vielzahl von NFC-B-Anwendungen emulieren kann, wobei die Steuereinrichtung (8) auf einen Empfang eines Single-Poll-Anfragesignals reagiert, indem es ein Poll-Antwortsignal sendet, das durch eine der Anwendungen vorgesehen wird,
wobei die Steuereinrichtung (8) auf den Empfang des Single-Poll-Anfragesignals reagiert, indem es ein Poll-Antwort-Signal in der Form eines Kollisionsemulationssignals sendet, das eine Kollision zwischen einer Vielzahl von Poll-Antwort-Signalen emuliert,
**dadurch gekennzeichnet, dass** die Steuereinrichtung (8) einen Vergleicher vorsieht, der angeordnet ist zum Vergleichen, ob die Anzahl von in dem Poll-Anfragesignal berichteten Zeitschlitzen kleiner als die Anzahl von aktiven NFC-B-Anwendungen ist, und angeordnet ist zum Reagieren darauf, dass die Anzahl von Zeitschlitzen kleiner als die Anzahl von aktiven Anwendungen ist, durch das Senden des Kollisionsemulationssignals.

2. NFC-B-Hörvorrichtung (1) nach Anspruch 1, wobei die Steuereinrichtung (8) das Kollisionsemulationssignal aus einer Kombination von zwei oder mehr Poll-Antwortsignalen erzeugt.

3. NFC-B-Hörvorrichtung (1) nach Anspruch 1, wobei das Kollisionsemulationssignal in einem Speicher für eine Sendung voraufgezeichnet ist.

4. NFC-B-Hörvorrichtung nach Anspruch 3, wobei die Steuereinrichtung (8) einen Vergleicher vorsieht, der die Anzahl von Zeitschlitzen mit einer maximalen Anzahl von Zeitschlitzen vergleicht, wobei die Steuereinrichtung auf ein Poll-Anfragesignal reagiert, indem sie die maximale Anzahl von Zeitschlitzen sendet, um eine geordnete Sequenz von Poll-Antwortsignalen zu senden, und zwar jeweils eines für jede Anwendung, die in jedem Zeitschlitz gesendet wird.

5. NFC-B-Hörvorrichtung nach Anspruch 4, wobei ein durch die Steuereinrichtung vorgesehener Vergleicher die Sequenznummer der aufgelösten Anwendungen mit der Anzahl von Schlitzen vergleicht, um das Kollisionsemulationssignal zu senden und eine neue geordnete Sequenz von Anwendungen zu erzeugen, die aktiv bleiben, wenn die Anwendungssequenz gleich der Anzahl von Zeitschlitzen ist.

6. NFC-B-Hörvorrichtung nach einem der vorstehenden Ansprüche, wobei die Steuereinrichtung (8) auf eine Sendung jedes Poll-Antwortsignals reagiert, um die Anzahl von aktiven Anwendungen zu dekrementieren, und einen Vergleicher vorsieht, der darauf reagiert, dass die Anzahl von aktiven Anwendungen null erreicht, indem er den Hörer (1) in einen Zustand für das Empfangen von Befehlen einer hohen Ebene versetzt.

7. Verfahren zum Steuern einer NFC-B-befähigten Hörvorrichtung nach Anspruch 1, das den Schritt (104) umfasst zum:
Vergleichen der Anzahl von Schlitzen, die in einem empfangenen Poll-Anfragesignal berichtet werden, mit einer Gesamtanzahl von NFC-B-Anwendungen, die an der Hörvorrichtung (1) aktiv sind, und, wenn die Anzahl von Schlitzen kleiner ist als die Anzahl von aktiven Anwendungen, Senden eines Kollisionsemulationssignals (107) zum Veranlassen der Lesevorrichtung (R), ein Kollisionsauflösungsverfahren, das die Anzahl von Schlitzen erhöht, zu implementieren.

8. Verfahren nach Anspruch 7, das einen Schritt zum Erstellen des Kollisionsemulationssignals durch das gleichzeitige Senden von wenigstens zwei der Poll-Antwortsignale umfasst.

9. Verfahren nach Anspruch 7, das einen Schritt zum Abrufen des Kollisionsemulationssignals aus einem Speicher, in dem es für eine Sendung voraufgezeichnet ist, umfasst.

10. Verfahren nach Anspruch 7, das einen Schritt (105) zum Vergleichen einer augenblicklichen Schlitzanzahl mit der Anzahl von Schlitzen und, wenn die Schlitzanzahl kleiner ist als die Anzahl von Schlitzen, einen Schritt (108) zum Senden des nächsten in einer Sequenz von zuvor nicht gesendeten Poll-Anfragesignalen für den Empfang in einem Zeitschlitz und einen Schritt (113), wenn die Anwendungssequenznummer gleich der Anzahl von Schlitzen ist und die Anzahl von aktiven Anwendungen nicht gleich null ist, zum Senden des Kollisionsemulationssignals umfasst.

11. Verfahren nach Anspruch 10, das einen Schritt (107) zum Erzeugen einer neuen Sequenz von Anruf-Antwortsignalen von den verbleibenden aktiven Anwendungen in jedem Verfahrenszyklus, in dem ein Kollisionsemulationssignal gesendet wird, umfasst.

## Revendications

1. Dispositif d'écoute habilité en communication en champ proche NFC-B (1), soit Near-Field Communication, comportant :
un contrôleur (8) pour commander un transmetteur et un récepteur moyennant lesquels le dispositif peut émuler une pluralité d'applications NFC-B, le contrôleur (8) répondant à la réception d'un signal de requête d'interrogation unique pour transmettre un signal de réponse de requête, pourvu par l'une des applications ;
ledit contrôleur (8) répondant à la réception d'un signal de requête d'interrogation unique pour transmettre un signal de réponse de requête sous forme d'un signal d'émulation de collision, qui émule une collision entre une pluralité de signaux de réponse de requête ;
**caractérisé en ce que** le contrôleur (8) fournit un comparateur agencé pour comparer le nombre de créneaux horaires rapporté dans le signal de requête d'interrogation moins le nombre d'applications NFC-B actives, et est agencé pour répondre au nombre de créneaux horaires, qui est inférieur au nombre d'applications actives en envoyant le signal d'émulation de collision.

2. Dispositif d'écoute NFC-B (1) selon la revendication 1, dans lequel le contrôleur (8) crée le signal d'émulation de collision parmi une combinaison de deux ou plusieurs signaux de réponse de requête.

3. Dispositif d'écoute NFC-B (1) selon la revendication 1, dans lequel le signal d'émulation de collision est préenregistré dans une mémoire pour sa transmission.

4. Dispositif d'écoute NFC-B selon la revendication 3, dans lequel le contrôleur (8) fournit un comparateur qui compare le nombre de créneaux horaires à un nombre maximum de créneaux horaires, moyennant quoi le contrôleur répond à un signal de requête d'interrogation qui transmet le nombre maximum de créneaux horaires pour transmettre une séquence ordonnée de signaux de réponse de requête, soit un pour chaque application transmise dans chaque créneau temporel.

5. Dispositif d'écoute NFC-B selon la revendication 4, dans lequel un comparateur fourni par le contrôleur compare le numéro de séquence des applications résolues au nombre de créneaux pour transmettre le signal d'émulation de collision et pour générer une nouvelle séquence ordonnée d'applications qui restent actives quand le numéro de séquence d'application est égal au nombre de créneaux horaires.

6. Dispositif d'écoute NFC-B selon l'une quelconque des revendications précédentes dans lequel le contrôleur (8) répond à la transmission de chaque signal de réponse de requête pour décrémenter le nombre d'applications actives, et procure un comparateur qui répond au fait que le nombre d'applications actives atteint zéro pour que l'auditeur (1) soit en état de recevoir des commandes de niveau haut.

7. Procédé de contrôle d'un dispositif d'écoute habilité NFC-B selon la revendication 1, comprenant l'étape (104) consistant à :
comparer le nombre de créneaux rapporté dans un signal de requête d'interrogation reçu à un nombre total d'applications NFC-B actives sur un dispositif d'écoute (1), et où le nombre de créneaux est inférieur au nombre d'applications actives, envoyer un signal d'émulation de collision (107) pour commander au dispositif de lecture (R) d'implémenter un procédé de résolution de collision qui augmentera le nombre de créneaux.

8. Procédé selon la revendication 7, comprenant l'étape de création du signal d'émulation de collision par la transmission simultanée d'au moins deux des signaux de réponse de requête.

9. Procédé selon la revendication 7, comprenant l'étape de récupération du signal d'émulation de collision dans une mémoire où il est préenregistré pour sa transmission.

10. Procédé selon la revendication 7, comprenant l'étape (105) de comparaison d'un numéro de créneau instantané au nombre de créneaux et où le numéro de créneau est inférieur au nombre de créneaux, l'étape (108) d'envoi du signal suivant dans une séquence de signaux de réponse de requête qui n'ont pas été envoyés précédemment, destinés à être reçus dans un créneau temporel, et l'étape (113) consistant, quand le numéro de séquence d'application est égal au nombre de créneaux et que le nombre d'applications actives n'est pas nul, à envoyer le signal d'émulation de collision.

11. Procédé selon la revendication 10, comprenant l'étape (107) de génération d'une nouvelle séquence de signaux de réponse de requête à partir des applications actives restantes à chaque cycle du procédé où un signal d'émulation de collision est transmis.
